# EUROPÄISCHE PATENTSCHRIFT

(11) **EP 2 120 023 B1**
(45) Veröffentlichungstag und Bekanntmachung des Hinweises auf die Patenterteilung: **18.04.2012**
(21) Anmeldenummer: 08156249.8
(22) Anmeldetag: 15.05.2008
(51) Int. Cl.: G01G 21/24, G01G 21/30, G01G 3/14

(54) **Gekapselte Wägezelle mit Eckenlasteinstellung**
Capsuled load cell with eccentric load calibration
Cellule de pesage encapsulée dotée d'un réglage de la charge angulaire

(43) Veröffentlichungstag der Anmeldung: 18.11.2009
(73) Patentinhaber: Mettler-Toledo AG, 8606 Greifensee (CH)
(72) Erfinder: Haefeli, Roman, 8606, Greifensee (CH); Emery, Jean-Christophe, 8005, Zürich (CH); Burkhard, Hans-Rudolf, 8492, Wila (CH)

(56) Entgegenhaltungen:
- EP-A- 0 587 420
- EP-A- 0 816 812
- WO-A-2005/031286
- JP-A- 2003 021 554
- US-A- 4 485 881
- US-A- 4 606 421
- US-A- 4 957 177

## Beschreibung

Die vorliegende Erfindung bezieht sich auf ein gravimetrisches Messinstrument, insbesondere eine gekapselte Wägezelle.

Viele gravimetrische Messinstrumente weisen eine Parallelführung auf. Eine Parallelführung beinhaltet mindestens einen feststehenden und einen beweglichen Parallelschenkel, sowie mindestens einen oberen und einen unteren Parallellenker. Eine von dem beweglichen Parallelschenkel getragene und vertikal geführte Waagschale nimmt die zu wägende Last auf, deren auf die Waagschale wirkende Kraft gegebenenfalls über einer kraftuntersetzende Hebelübertragung an einen Messaufnehmer übertragen wird. Die Parallelführung, das Kraftübertragungssystem und der Messaufnehmer bilden im Wesentlichen die Wägezelle eines gravimetrischen Messinstruments. Es sind im Stand der Technik verschiedene Funktionsprinzipien von Wägezellen bekannt, wie beispielsweise Wägezellen mit Dehnungsmessstreifen, Wägezellen mit Saiten oder EMFC- Wägezellen (Electro Magnetic Force Compensation).

Bei EMFC- Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Wägezellen mit Dehnungs-Messwertaufnehmer ist ein Verformungskörper mit Dehnungsmessstreifen versehen. Dieser Verformungskörper wird durch die aufgelegte Last elastisch deformiert. Häufig wird der Verformungskörper als Messparallelogramm beziehungsweise als Parallelführung mit speziell ausgestalteten Biegestellen ausgestaltet, wodurch definierte Deformationsstellen geschaffen werden. Im Bereich dieser Deformationsstellen beziehungsweise Biegestellen sind die Dehnungsmessstreifen angeordnet. Die durch die Verformung des Deformationskörpers infolge einer Belastung des beweglichen Parallelschenkels gedehnten oder gestauchten Dehnungsmessstreifen weisen einen vergleichsweise zum unbelasteten Zustand des beweglichen Parallelschenkels veränderten elektrischen Widerstandswert auf, welcher ein Mass für die aufgelegte Last ist.

Bei Saiten- Wägezellen entspricht der mechanische Aufbau weitgehend den EMFC- und DMS- Wägezellen, mit dem Unterschied, dass an Stelle eines elektromagnetischen Messwertaufnehmers ein Schwingsaiten-Messwertaufnehmer eingesetzt wird. Durch die Last wird eine schwingende Saite gespannt, deren Frequenzänderung wiederum ein Mass für die aufgelegte Last darstellt.

Ein Wesenszug der vorstehend beschriebenen Wägezellen, welcher allen gravimetrischen Messinstrumenten mittels einer Parallelführung geführten Waagschalen gemeinsam ist, besteht darin, dass die von der Waagschale an den Messaufnehmer übertragene Gewichtskraft im allgemeinen geringfügig davon abhängt, ob die Wägelast zentrisch auf der Waagschale platziert ist oder aus der Mitte der Waagschale gegen den Rand verschoben ist. Dies kann die unerwünschte Folge haben, dass ein gravimetrisches Messinstrument beziehungsweise eine Waage für ein und dieselbe Wägelast verschiedene Gewichtsbeträge anzeigt, je nachdem wo die Wägelast auf der Waagschale platziert wurde. Diese Abweichungen bei exzentrischer Platzierung der Wägelast auf der Waagschale werden gemeinhin als Eckenlastfehler bezeichnet.

Bei einem Messparallelogramm beziehungsweise einer Parallelführung, das heisst einer Parallelführung des Waagschalenträgers mittels zweier paralleler, im Wesentlichen horizontaler Parallellenker, werden Eckenlastfehler vorwiegend dadurch verursacht, dass diese Parallellenker von einer idealen, absoluten Parallelität geringfügig abweichen. Dabei entspricht die relative Grösse des Eckenlastfehlers, das heisst das Verhältnis der beobachteten Gewichtsabweichung zur Grösse des betreffenden Testgewichts etwa der den Fehler verursachenden relativen geometrischen Abweichung. Man unterscheidet zwischen einem Eckenlastfehler in der Längsrichtung und einem Eckenlastfehler in der Querrichtung der Parallelführung, entsprechend der Verschieberichtung des Testgewichts auf der Waagschale in der Eckenlastfehlerprüfung der Waage. Ein Eckenlastfehler in der Längsrichtung kommt daher, dass der vertikale Abstand der Parallellenker an dem zum feststehenden Parallelschenkel verbundenen Ende nicht genau gleich ist wie der am andern, mit dem beweglichen Parallelschenkel verbundenen Ende. Ein Eckenlastfehler in der Querrichtung wird dagegen durch eine gegenseitige Verwindung der beiden Parallellenker gegeneinander verursacht, das heisst ein Zustand bei dem der Abstand zwischen den Parallellenkern über die Breite der Parallellenker variiert.

Im Stand der Technik, beispielsweise in der EP 0 990 880 A2 EP 0 587 420 A1, in der JP 2002 365125 A und in der WO 2005/031286 werden Parallelführungen von Wägezellen offenbart, welche eine Vorrichtung zur Justierung der Eckenlast aufweisen. Deren Einstellmechanismus ist derart konzipiert, dass der feststehende Parallelschenkel zwischen den Festlegungsstellen der Parallellenker mindestens eine Deformationsstelle aufweist, durch deren Ausgestaltung eine Schwenkachse orthogonal zur Längsrichtung der Parallelführung definiert ist. Durch Verschwenken der Festlegungsstellen zueinander mittels einer Justierschraube, kann das mit dem feststehenden Parallelschenkel verbundene Ende des oberen Parallellenkers sowohl gehoben als auch gesenkt werden. Damit lässt sich der Eckenlastfehler in der Längsrichtung korrigieren. Je nach Ausgestaltung des Einstellmechanismus kann auch die Schwenkachse, beziehungsweise die Festlegungsstelle in ihrer Querneigung verstellt werden, wodurch die Eckenlastfehler in der Querrichtung der Wägezelle korrigiert werden können.

Eckenlasteinstellungen können vorgenommen werden, solange die Parallelführung der Wägezelle frei zugänglich ist. Wenn aber, wie in der US 5 895 894 oder in der US 4 957 177 offenbart, die Wägezelle in einer nicht mehr öffnenbaren Kapselung eingeschlossen ist, kann keine Eckenlasteinstellung mehr vorgenommen werden. Hinzu kommt, dass wie in der US 4 957 177 ausführlich beschrieben wird, dass die Kapselung in der Gestalt eines Faltenbalgs selbst einen Einfluss auf die Eckenlastgenauigkeit beziehungsweise auf den Eckenlastfehler haben kann. Dadurch unterscheiden sich auch mechanisch identische gekapselte Wägezellen bezüglich ihres Eckenlastfehlers voneinander, selbst wenn deren Parallelführung vor der Montage der Kapselung justiert wurde. Diese Unterschiede können nur noch mittels einer mit dem Messwandler verbundenen Signalverarbeitungseinheit aufwändig kompensiert werden.

Die Aufgabe der vorliegenden Erfindung besteht somit darin, ein gravimetrisches Messinstrument mit einer gekapselten Wägezelle zu schaffen, welches die vorangehend beschriebenen Nachteile betreffend die Eckenlastgenauigkeit nicht aufweist.

Gelöst wir diese Aufgabe mit einem gravimetrischen Messinstrument nach Anspruch 1.

Ein gravimetrisches Messinstrument beinhaltet eine Wägezelle und eine flexible, rohrförmigen Kapselung. Die Wägezelle weist eine Parallelführung und mindestens einen Messwandler auf. Die Parallelführung beinhaltet einen beweglichen Parallelschenkel, welcher durch zwei Parallellenker vertikal geführt mit einem feststehenden Parallelschenkel verbunden ist, wobei an den Verbindungsstellen zwischen den Parallellenkern und den Parallelschenkeln Biegelager ausgebildet oder angeordnet sind. Das eine Ende der rohrförmigen Kapselung ist am feststehenden Parallelschenkel befestigt und das andere Ende der rohrförmigen Kapselung ist am beweglichen Parallelschenkel befestigt, wodurch zumindest die Parallelführung und der Messwandler von der Kapselung umfangen sind, so dass diese vor Feuchtigkeit und Schmutz ausserhalb der Kapselung beziehungsweise aus der Umgebung des gravimetrischen Messinstruments geschützt sind. Folglich weist die Kapselung einen hermetisch dichten Innenraum auf, in welchem der Messwandler und die Parallellenker angeordnet sind.

Der mindestens eine Messwandler ist mit einer Signalverarbeitungseinheit verbunden, welche sowohl innerhalb der Kapselung als auch ausserhalb der Kapselung angeordnet sein kann. Um eine hohe Austauschbarkeit der gekapselten Wägezelle zu erreichen, kann auch nur ein Teil der Signalverarbeitung, beispielsweise ein Schaltungsmodul im Innern der Kapselung angeordnet sein. Dieses Schaltungsmodul weist beispielsweise lediglich ein Speichermodul und eine zur wandlung der von dem mindestens einen Messwandler abgegebenen analogen Signale dienende Wandlerschaltung auf. Das Speichermodul und die Wandlerschaltung können über Verbindungsleitungen mit einer ausserhalb der Kapselung angeordneten Prozessoreinheit des gravimetrischen Messinstruments verbunden sein. Durch diese Anordnung kann die Abwärme eines Prozessors der Prozessoreinheit ausserhalb des engen, durch die Kapselung hermetisch geschlossenen Innenraums gehalten werden. Dadurch wird eine Temperaturerhöhung im Innenraum weitgehend vermieden. Im Speichermodul sind ferner Kompensationsdaten gespeichert, welche von der Prozessoreinheit abgerufen werden können und mittels derer das gewandelte Rohsignal der Wägezelle korrigiert werden kann. Diese Kompensationsdaten sind Wägezellen- spezifische Daten, welche aufgrund der Fertigungstoleranzen zwangsläufig variieren und bei der Endkontrolle im Herstellerwerk für jede Wägezelle ermittelt werden. Dank dieser Ausführung kann eine gekapselte Wägezelle problemlos ausgetauscht werden, ohne dass das gesamte gravimetrische Messgerät neu abgeglichen werden muss. Gegebenenfalls gehören zum gravimetrischen Messgerät auch eine Eingabeeinheit und/oder eine Anzeigeeinheit.

Erfindungsgemäss weist das vorangehend beschriebene gravimetrische Messgerät eine Parallelführung auf, an deren beweglichem Parallelschenkel und/oder an deren feststehendem Parallelschenkel ein Justierbereich ausgebildet ist, mittels welchem Justierbereich der Abstand mindestens eines Biegelagers des oberen Parallellenkers zu einem Biegelager des unteren Parallellenkers einstellbar ist. Dieser Justierbereich ist mit mindestens einem ausserhalb der Kapselung angeordneten Stellbereich mechanisch verbunden und mittels dieses Stellbereichs veränderbar.

Aufgrund dieser Ausgestaltung kann die Eckenlasteinstellung an einer Parallelführung vorgenommen werden, welche durch die Kapselung umschlossen und daher eigentlich unzugänglich ist. Ein besonderer Vorteil dieser Erfindung ist, dass der mechanische Einfluss der Kapselung auf die Eckenlastgenauigkeit, beispielsweise durch asymmetrisch verteilte Reaktionskräfte infolge der Auslenkung des beweglichen Parallelschenkels, bei der Justierung auch mitberücksichtigt werden kann. Selbst wenn der Einfluss der Kapselung infolge einer plastische Deformation derselben sich verändert, kann die Eckenlast nachjustiert werden.

Der Justierbereich kann verschieden ausgestaltet sein. Beispielsweise kann der Justierbereich mindestens eine Deformationsstelle aufweisen, welche durch mindestens eine, den beweglichen oder feststehenden Parallelschenkel horizontal durchsetzende Aussparung ausgebildet ist. Durch Kraft- oder Momentanwendung ist eine Verschwenkung des Justierbereichs um eine durch die Deformationsstelle in der Querrichtung der Parallelführung definierte Lagerachse erzeugbar, wobei das in den Justierbereich einmündende Ende eines der Parallellenker als Folge besagter Verschwenkung eine bleibende Verstellung in Vertikalrichtung erfährt. Durch diese Verstellung in der Vertikalrichtung werden die Abstände zwischen den oberen Biegelagern und den unteren Biegelager, genauer die Abstände zwischen deren Biegeachsen, der beiden Parallelschenkel präzise zueinander abgeglichen, wodurch im Wesentlichen ein Eckenlastfehler bezüglich der Längsrichtung der Parallelführung korrigierbar ist.

Im Rahmen der vorliegenden Beschreibung beziehen sich Ausdrücke wie "oben", "unten", "horizontal", "vertikal" und dergleichen stets auf die Orientierung der Parallelführung im normalen Betriebszustand, mit anderen Worten auf die Richtung der Schwerkraft.

Auch wenn die Deformationsstelle durch Aussparungen ausgebildet wird, heisst das nicht, dass die Deformationsstelle zwingend monolithisch aus dem feststehenden und/oder beweglichen Parallelschenkel herausgearbeitet sein muss. Die Deformationsstelle sowie die Parallelschenkel können auch aus mehren zusammengesetzten Einzelteilen bestehen. Um Probleme bezüglich thermisch verursachter Spannungen in der Parallelführung durch die Verwendung unterschiedlicher Materialien zu vermeiden, sind aber die Parallelschenkel vorzugsweise einstückig aufgebaut, an welchen beispielsweise mittels Fräsen, Sägen, Hobeln, Bohren, Drehen, Schneiden, Erodieren oder weiterer Bearbeitungsmethoden Aussparungen und damit mindestens eine Deformationsstelle erzeugt wird.

Die den Justierbereich bildenden Aussparungen reduzieren somit die Materialstärke des feststehenden Parallelschenkels und/oder des beweglichen Parallelschenkels an mindestens einer geeigneten Stelle. Eine geeignete Stelle bedeutet, dass sich die Parallellenker zueinander justieren lassen müssen, beispielsweise dass die mindestens eine Aussparung zwischen dem oberen Parallellenker und dem unteren Parallellenker angeordnet ist.

Zum Parallelschenkel gehören alle Teile, welche dem Verbinden des jeweiligen oberen und unteren Parallellenkers dienen, so dass diese gegeneinander abgestützt beziehungsweise voneinander distanziert sind.

In einer besonderen Ausgestaltung der Parallelführung ist die Deformationsstelle durch Einwirkung einer Justierkraft oder eines Justiermomentes auf den Stellbereich in kontrollierter Weise plastisch verformbar. Durch die plastische Verformung der mindestens einen Deformationsstelle kann eine gezielte, bleibende Änderung in der gegenseitigen Lage der Parallellenker erreicht werden. Infolgedessen bleibt der justierte Eckenlastfehler auch ohne Fixierung des Justierbereichs mit Fixierungselementen wie Schrauben, Keile, Platten und dergleichen erhalten. Vorzugsweise wird aber eine Fixierung vorgesehen, da je nach der Ausgestaltung der gekapselten Wägezelle Stösse auf die Kapselung zu einer Dejustierung der Parallelführung führen könnten.

In einer bevorzugten Weiterbildung der ersten Ausführung ist der Justierbereich an dem in den Justierbereich einmündenden und vertikal verstellbaren Ende des Parallellenkers von einer weiteren Aussparung durchsetzt, welche in der vertikalen Mittellängsschnittfläche des beweglichen Parallelschenkels oder des feststehenden Parallelschenkels verläuft und bis zum elastischen Biegelager geführt ist. Das Biegelager ist aber nicht geteilt. Durch die weitere Aussparung werden zwei getrennt nebeneinander liegende Justierbereiche mit getrennten Deformationsstellen gebildet, so dass:
- einerseits durch eine parallele Kraft- oder Momentanwendung an den zwei getrennten nebeneinander liegenden Justierbereichen und damit durch eine parallele Verschwenkung derselben, eine bleibende parallele Vertikalverstellung des elastischen Biegelagers erzeugt und dadurch ein Eckenlastfehler bezüglich der Längsrichtung der Parallelführung korrigiert werden kann und
- anderseits durch eine antiparallele Kraft- oder Momentanwendung an den zwei getrennten nebeneinander liegenden Justierbereichen und durch die dadurch verursachte entgegen gesetzte Verschwenkung der Justierbereiche eine bleibende Verwindung des verstellbaren Parallellenker-Endes erzeugt und dadurch ein Eckenlastfehler bezüglich der Querrichtung der Parallelführung korrigiert werden kann.

Diese Ausführung eignet sich insbesondere für Messparallelogramme mit Dehnungsmessstreifen im Bereich der elastischen Biegelager.

Es ist allgemein festzustellen, dass eine parallele, beziehungsweise eine gleich grosse und gleich gerichtete Verstellung an den beiden Justierbereichen vorwiegend den Eckenlastfehler in der Längsrichtung der Parallelführung beeinflusst, während eine antiparallele, das heisst gleich grosse aber entgegengesetzt gerichtete Verstellung an den beiden Justierbereichen vorwiegend den Eckenlastfehler in der Querrichtung der Parallelführung beeinflusst. Dabei kann jedoch eine gewisse gegenseitige Beeinflussung zwischen den beiden Richtungen auftreten, so dass eine parallele Verstellung auch in geringerem Mass den Eckenlastfehler in der Querrichtung und eine antiparallele Verstellung auch in geringerem Mass den Eckenlastfehler in der Längsrichtung beeinflussen kann.

Um eine Verwindung des Parallellenkers zusätzlich zu erleichtern, ist vorzugsweise bei Parallelführungen für hochauflösende gravimetrische Messinstrumente das elastische Biegelager an dem in den Justierbereich einmündenden und vertikal verstellbaren Ende des Parallellenkers mittels einer Weiterführung der weiteren Aussparung bis zum Parallellenker aufgespalten und dadurch wie der Justierbereich aufgetrennt. Das elastische Biegelager kann aber auch mittels einer Durchbrechung in zwei getrennte nebeneinander liegende elastische Biegelager aufgespalten sein und die weitere Aussparung in diese Durchbrechung münden.

Die einfachste Art, den Justierbereich mit dem Stellbereich zu verbinden ist beispielsweise eine Anordnung von mindestens zwei Hebelarmen zwischen diesen Bereichen. Der Stellbereich umfasst dann diejenigen Hebelabschnitte, welche aus der Kapselung herausragen. Einer dieser Hebelarme kann eine Anschlussstelle für eine Waagschale oder eine Abstützung gegen den Grund aufweisen. Am anderen Hebelarm oder zwischen den Hebelarmen kann mindestens eine Bohrung zum Ansetzen eines Einstellwerkzeugs, mindestens eine geeignete Form zum Ansetzen eines Schraubenziehers oder Schlüssels, einer Einstellschraube, eines Richtwerkzeugs oder eines Einstellkeils ausgebildet sein. Ungeachtet dessen, an welchem Parallelschenkel der Justierbereich ausgebildet ist, dient der eine Hebel immer der Einleitung einer Kraft oder eines Drehmoments, beziehungsweise einer Bewegung in den Justierbereich, während der andere Hebel immer der Abstützung dieser Kraft beziehungsweise dieses Drehmoments und damit der Fixierung eines Teils des Justierbereichs dient. Nur so kann der Justierbereich verändert beziehungsweise der obere Teil des Justierbereichs zum unteren Teil des Justierbereichs im Innenraum der Kapselung verschwenkt werden.

Beide Hebel sind erfindungsgemäss durch die Wand der Kapselung hindurchgeführt. Damit die Hebel gegeneinander verschwenkt werden können, muss die Wand zumindest im Bereiche eines Hebels eine gewisse Elastizität aufweist, da sich die beiden Hebel sonst nicht relativ zueinander verschwenken lassen. Sofern die Kapselung aus Gummi oder sonst einem geeigneten, weichelastischen Kunststoff gefertigt ist, reicht deren Eigenelastizität aus, dass die Hebel verschwenkt werden können und dadurch die Kapselung leicht deformiert wird.

Falls die Kapselung beispielsweise aus rostfreiem Stahl gefertigt ist, müssen geeignete Ausgestaltungen vorgesehen werden, dass sich die Hebel überhaupt verschwenken lassen.

Vorzugsweise weist die Kapselung einen rohrförmigen Mittelteil und eine erste Stirnseite und eine zweite Stirnseite auf, welche Stirnseiten mit dem rohrförmigen Mittelteil gasdicht verbunden sind. Um ein Auslenken des beweglichen Parallelschenkels ohne gravierende Einflüsse der Kapselung (Federkonstante der Kapselung) zu ermöglichen, weist diese vorzugsweise einen faltenbalgförmig ausgebildeten Mittelteil auf. Die erste Stirnseite ist mit dem beweglichen Parallelschenkel gasdicht verbunden und die zweite Stirnseite ist mit dem feststehenden Parallelschenkel gasdicht verbunden. Da die beiden Stirnseiten ebene, dünne Platten sind, können diese leicht verformt, insbesondere geknickt und gebeult werden.

Um möglichst wenige Deformationen infolge der Justierung der Eckenlast an der Kapselung zu verursachen, kann die Lage der Deformationsstelle in einer, eine Stirnseite der Kapselung enthaltenden Ebene angeordnet sein. Dadurch können Verspannungen in der Kapselung minimiert werden, da die Stirnseite lediglich geknickt und nicht geknickt und gleichzeitig gestaucht wird.

Noch weniger Verspannungen in der Kapselung entstehen, wenn die Stirnseite mindestens eine Deformationssicke aufweist. Durch diese Deformationssicke wird einerseits das Deformationsgebiet begrenzt und andererseits können bei einer geeigneten Ausgestaltung dieser Deformationssicke die durch die Justierung verursachten Materialspannungen im Gehäuse auf ein Minimum reduziert werden.

Die vorangehend beschriebenen Ausführungen lassen sich zwar durchaus realisieren, sie sind aber in der Herstellung aufwändig. So muss beispielsweise jeder Hebel für sich an seiner Durchführungsstelle durchs Gehäuse mit diesem verbunden werden, damit der Innenraum der Kapselung dicht ist. Ferner bedeutet das Einprägen von Deformationssicken an der Kapselung meistens einen zusätzlichen Arbeitsaufwand. Zudem können sich die in der Kapselung verbleibenden Spannungen auch auf die Genauigkeit des Messresultates des gravimetrischen Messinstruments auswirken und sich über die Zeit verändern.

Um dies zu vermeiden, sind vorzugsweise Lösungen anzustreben, bei welchen weder ein Knicken noch ein Stauchen, Strecken oder Beulen der Kapselung notwendig ist, um den Justierbereich zu verändern. In einer weiteren Ausgestaltung der Erfindung weist deshalb der Justierbereich mindestens einen Kniehebel auf. Dessen beide Kniehebelschenkel sind an ihrem einen Ende durch ein Kniegelenk miteinander schwenkbar verbunden und die beiden Kniehebelschenkel sind mit ihrem andern Ende im Bereich der Biegelager mit dem den Justierbereich aufweisenden Parallelschenkel schwenkbar verbunden. Ferner ist der ausserhalb der Kapselung angeordnete Stellbereich durch ein Übertragungselement mit dem Kniegelenk verbunden. Mit dem Stellbereich und dem Übertragungselement lässt sich die Lage des Kniegelenks zum beweglichen Parallelschenkel verändern, so dass mittels des Kniehebels durch aufspreizen oder zusammenziehen des Justierbereichs der Abstand eines Biegelagers des oberen Parallellenkers zu einem Biegelager des unteren Parallellenkers verändert und einjustiert werden kann.

Um den Einstellvorgang zu erleichtern, kann der Abstand der Biegelager des einen Parallelschenkels im unjustierten Zustand grösser sein als der Abstand der Biegelager des anderen Parallelschenkels. Dadurch muss zwar immer einjustiert werden, aber der Justierbereich muss nur in einer Richtung verschwenkt, und somit der Stellbereich nur in einer Richtung bewegt werden.

Einzelheiten der erfindungsgemässen Parallelführung werden im Folgenden anhand der Zeichnungen gemäss nachstehender Übersicht näher erläutert.
- Figur 1 A: zeigt ein gravimetrisches Messinstrument in der Ansicht und im Schnitt in in einem ersten Beispiel mit einem Justierbereich, welcher eine Eckenlasteinstellung nur in der Längsrichtung ermöglicht;
- Figur 1B: zeigt das gravimetrische Messinstrument aus Figur 1A in der Draufsicht und im Schnitt;
- Figur 2A: zeigt ein gravimetrisches Messinstrument in der Ansicht und im Schnitt in in einem zweiten Beispiel mit einem Justierbereich, welcher eine Eckenlasteinstellung in der Längsrichtung und in der Querrichtung ermöglicht;
- Figur 2B: zeigt das gravimetrische Messinstrument aus Figur 2A in der Draufsicht und im Schnitt;
- Figur 3A: zeigt ein gravimetrisches Messinstrument in der Ansicht und im Schnitt in einer ersten Ausführung wobei der Stellbereich in der Kapselung ausgebildet ist;
- Figur 3B: zeigt das gravimetrische Messinstrument aus Figur 3A in der Draufsicht und im Schnitt;
- Figur 4A: zeigt ein gravimetrisches Messinstrument in der Ansicht und im Schnitt in einer zweiten Ausführung, welche weitgehend der dritten Ausführung entspricht, jedoch Deformationssicken in einer Stirnseite der Kapselung aufweist;
- Figur 4B: zeigt das gravimetrische Messinstrument aus Figur 4A in der Draufsicht und im Schnitt;
- Figur 4C: zeigt in der Aufsicht eine Stirnseite des gravimetrischen Messinstruments aus den Figuren 4A und 4B mit einer Deformationssicke;
- Figur 5A: zeigt ein gravimetrisches Messinstrument in der Ansicht und im Schnitt in einem dritten Beispiel mit einem Justierbereich mit zwei Kniehebeln;
- Figur 5B: zeigt das gravimetrische Messinstrument aus der Figur 5A in der Draufsicht und im Schnitt;
- Figur 6: zeigt in dreidimensionaler Darstellung den mit einem Justierbereich versehenen Teil eines gravimetrischen Messinstruments in einer dritten Ausführung.

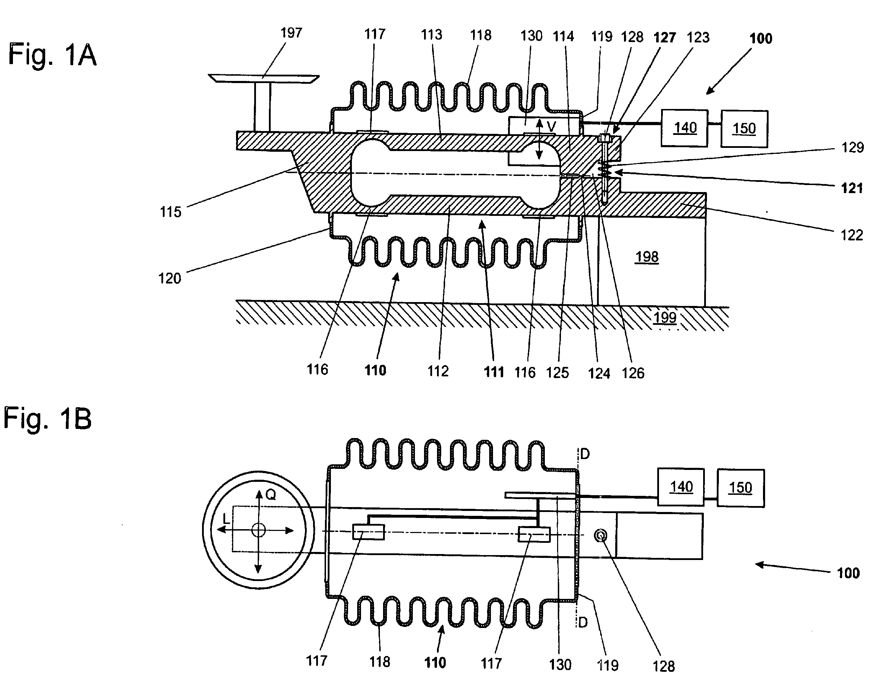

Figur 1 zeigt ein gravimetrisches Messinstrument 100 in der Ansicht und im Schnitt in einem ersten Beispiel. Das gravimetrische Messinstrument 100 weist eine Wägezelle 110, ein Schaltungsmodul 130, ein Prozessormodul 140 und eine Eingabe/Ausgabeeinheit 150 auf. Die Wägezelle 110 beinhaltet eine Parallelführung 111, deren feststehender Parallelschenkel 114 über eine Stütze 198 gegen den Grund 199 abgestützt ist. Die Wägezelle 110 weist ferner einen beweglichen Parallelschenkel 115 auf, welcher mit einem Lastaufnehmer 197, beispielsweise mit einer Waagschale verbunden ist. Der bewegliche Parallelschenkel 115 ist mittels eines oberen Parallellenkers 113 und mittels eines unteren Parallellenkers 112 vertikal geführt und mit dem feststehenden Parallelschenkel 114 verbunden. An den Verbindungsstellen zwischen den Parallellenkern 112, 113 und den Parallelschenkeln 114, 115 sind elastische Biegelager 116 ausgebildet. Im Bereich jeder Verbindungsstelle beziehungsweise jedes Biegelagers 116 ist je ein Messwandler, genauer ein Dehnungsmessstreifen 117 angeordnet. Selbstverständlich können zwischen dem feststehenden Parallelschenkel 114 und dem beweglichen Parallelschenkel 115 auch andere Messwandler angeordnet sein, so zum Beispiel ein elektromechanischer Messaufnehmer oder ein Schwingsaiten-Messwertaufnehmer. Die konkreten Ausgestaltungsmöglichkeiten einer Parallelführung mit diesen Messwandlertypen sind im Stand der Technik bekannt und werden daher nicht eingehend beschrieben.

Die Parallelführung 111 ist teilweise von einer rohrförmigen Kapselung 118 dicht umschlossen, deren Mittelteil als Faltenbalg ausgestaltet ist. Die Kapselung 118 weist ferner zwei Stirnseiten 119, 120 auf, wobei die erste Stirnseite 119 mit einem am feststehenden Parallelschenkel 114 ausgebildeten Flansch verbunden ist und die zweite Stirnseite 120 mit einem am beweglichen Parallelschenkel 115 ausgebildeten Flansch verbunden ist. Die Kapselung 118 kann mit diesen Flanschen beispielsweise gasdicht verschraubt, verklebt, verschweisst oder verpresst sein.

Am feststehenden Parallelschenkel 114 ist ferner ein Justierbereich 121 ausgebildet. Dieser weist einen ersten Hebel 122 und einen zweiten Hebel 123 auf, welche mittels einer Deformationsstelle 124 miteinander verbunden sind. Die Deformationsstelle 124 wird durch eine erste Aussparung 125 und durch eine zweite Aussparung 126 ausgebildet, welche den feststehenden Parallelschenkel 114 horizontal durchsetzen. Durch die Deformationsstelle 124 wird eine in der Figur 1B angegebene, horizontale Lagerachse D definiert, um welche Lagerachse D die beiden Hebel 122, 123 gegeneinander verschwenkbar sind. Der erste Hebel 122 weist die Verbindungsstelle zur Stütze 198 auf. Folglich werden über den ersten Hebel 122 die Reaktionskräfte abgestützt, wenn eine Justierkraft oder ein Justierdrehmoment am zweiten Hebel 123 angreift. Beim Verschwenken des zweiten Hebels 123 zum ersten Hebel 122 wird das am zweiten Hebel 123 anschliessende Biegelager 116 in der vertikalen Verschieberichtung V verstellt, so dass sich der Abstand vom oberen Biegelager 116 zum unteren Biegelager 116 einstellen lässt.

Die beiden Hebel 122, 123 sind derart ausgestaltet, dass deren erste Hebelabschnitte, gebildet durch die erste Aussparung 125, innerhalb der Kapselung 118 angeordnet sind und deren zweite Hebelabschnitte, gebildet durch die zweite Aussparung 126, ausserhalb der Kapselung 118 angeordnet sind. Damit sind die zweiten Hebelabschnitte ein wesentlicher Teil eines Stellbereichs 127, welcher ausserhalb der Kapselung 118 und folglich in der Umgebung des gravimetrischen Messinstruments 100 angeordnet ist. Um eine Feinverstellung des Justierbereichs 121 zu gewährleisten, ist zwischen den beiden Hebeln 122, 123 eine Stellschraube 128 angeordnet. Diese sichert zudem die Hebel 122, 123 in der einen Schwenkrichtung zueinander, während für die andere Schwenkrichtung eine zwischen den Hebeln 122, 123 angeordnete Schraubendruckfeder 129 die Sicherung übernimmt, so dass sich die Einstellung des Justierbereichs 121 während des Betriebes des gravimetrischen Messinstruments 100 nicht verändert.

Figur 1B zeigt das gravimetrische Messinstrument 100 aus der Figur 1A in der Draufsicht, wobei nur die Kapselung 118 im Schnitt dargestellt ist. Die Wägezelle 110 weist nur eine Stellschraube 128 auf, wodurch klar ersichtlich ist, dass bei dieser Ausführung nur eine Justierung des Eckenlastfehlers in der Längsrichtung L der Wägezelle 110 möglich ist, nicht aber eine Eckenlasteinstellung in der Querrichtung Q.

Wie in den Figuren 1A und 1B dargestellt, ist die Deformationsstelle 124 in der Ebene der ersten Stirnseite 119 angeordnet. Dadurch wird beim Justieren des Eckenlastfehlers die Stirnseite 119 nur geknickt und nicht zusätzlich gestaucht oder gedehnt.

Wie aus der Figur 1B ersichtlich ist, sind die Dehnungsmessstreifen 117 über Verbindungsleitungen mit dem Schaltungsmodul 130 verbunden. Das Schaltungsmodul 130 weist beispielsweise lediglich ein Speichermodul und eine zur Wandlung der von den Dehnungsmessstreifen 117 abgegebenen analogen Signale dienende Wandlerschaltung auf. Das Speichermodul und die Wandlerschaltung sind über Verbindungsleitungen mit der ausserhalb der Kapselung 118 angeordneten Prozessoreinheit 140 verbunden. Durch diese Anordnung kann die Abwärme eines Prozessors der Prozessoreinheit 140 ausserhalb des engen, durch die Kapselung 118 hermetisch zur Umgebung abgeschlossenen Innenraums gehalten werden. Dadurch wird eine Temperaturerhöhung im Innenraum weitgehend vermieden. Im Speichermodul sind ferner Kompensationsdaten gespeichert, welche von der Prozessoreinheit 130 abgerufen werden können und mittels derer das gewandelte Rohsignal der Wägezelle 110 korrigiert werden kann. Diese Kompensationsdaten sind Wägezellen- spezifische Daten, welche aufgrund der Fertigungstoleranzen zwangsläufig variieren und bei der Endkontrolle im Herstellerwerk für jede Wägezelle 110 ermittelt werden. Dank dieser Ausführung kann eine gekapselte Wägezelle 110 problemlos ausgetauscht werden, ohne dass das gesamte gravimetrische Messgerät 100 neu abgeglichen werden muss. Die von der Prozessoreinheit 140 verarbeiteten Messsignale werden als Wägewerte an die Eingabe/Ausgabeeinheit 150 weitergeleitet. Selbstverständlich kann die Prozessoreinheit 140 aber auch innerhalb der Kapselung 118 angeordnet sein. Ferner können auch das Schaltungsmodul 130 und die Prozessoreinheit 140 auf einer Platine zusammengefasst sein und entweder innerhalb oder ausserhalb der Kapselung 118 angeordnet sein.

In den nachfolgenden Figuren werden das zum gravimetrischen Messinstrument gehörende Schaltungsmodul, die Prozessoreinheit die Eingabeeinheit und die Ausgabeeinheit nicht mehr dargestellt und beschrieben. Auch der Lastaufnehmer am beweglichen Parallelschenkel und die Abstützung des feststehenden Parallelschenkels am Grund sind in den nachfolgenden Figuren nicht mehr dargestellt und beschrieben.

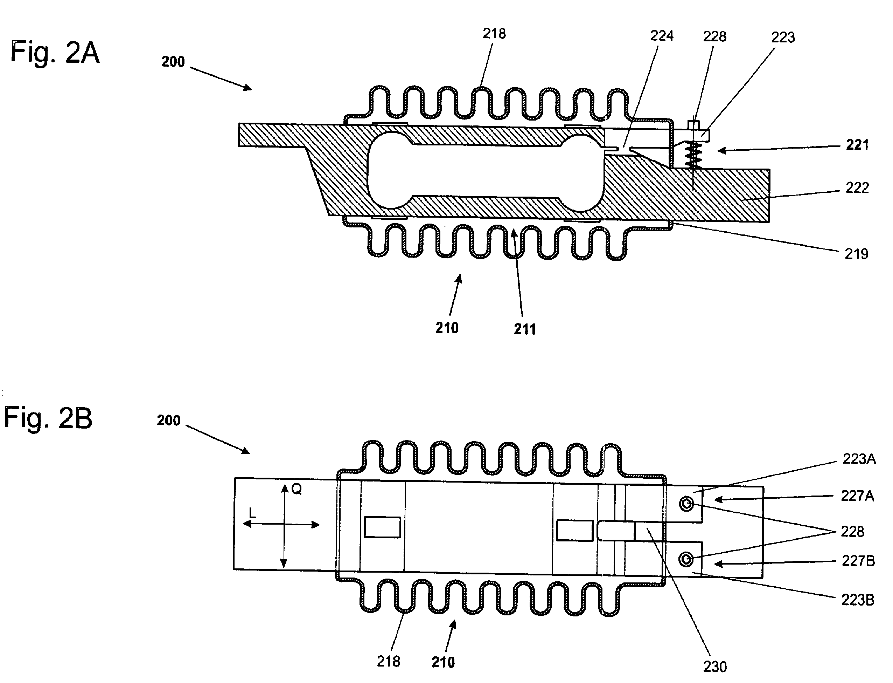

Die Figur 2A zeigt ein gravimetrisches Messinstrument 200 in der Ansicht und im Schnitt in einem zweiten Beispiel, die Figur 2B zeigt dasselbe Messinstrument 200 in der Draufsicht, wobei nur die Kapselung 218 im Schnitt dargestellt ist. Bis auf den Justierbereich 221 der Parallelführung 211, unterscheidet sich die Wägezelle 210 dieser Ausführung nicht von der in den Figuren 1A und 1B beschriebenen ersten Ausführung. Der Justierbereich 221 unterscheidet sich vom vorangehend beschriebenen Justierbereich dahingehend, dass er in zwei nebeneinander liegende Justierbereiche aufgeteilt ist und dadurch eine Eckenlasteinstellung in der Längsrichtung L und in der Querrichtung Q ermöglicht. Dies kann wie in den Figuren 2A und 2B dargestellt, dadurch erzielt werden, dass der zweite Hebel 223 und die Deformationsstelle 224 in der Längsrichtung der Wägezelle 210 mittels einer Längsnut 230 in einen rechten Hebel 223A und einen linken Hebel 223B aufgeteilt ist.

Eine parallele, beziehungsweise eine gleich grosse und gleich gerichtete Verschwenkung des rechten Hebels 223A und des linken Hebels 223B beeinflusst vorwiegend den Eckenlastfehler in der Längsrichtung L der Parallelführung 211, während eine antiparallele, das heisst gleich grosse aber entgegengesetzt gerichtete Verstellung an den beiden Hebeln 223A, 223B vorwiegend den Eckenlastfehler in der Querrichtung Q der Parallelführung 211 beeinflusst. Dabei kann jedoch eine gewisse gegenseitige Beeinflussung zwischen den beiden Richtungen auftreten, so dass eine parallele Verstellung auch in geringerem Mass den Eckenlastfehler in der Querrichtung Q und eine antiparallele Verstellung auch in geringerem Mass den Eckenlastfehler in der Längsrichtung L beeinflussen kann. Selbstverständlich weisen beide Justierbereiche je einen Stellbereich 227A, 227B mit einer Stellschraube 228 auf.

Wie aus den Figuren 2A und 2B zu entnehmen ist, ist die Deformationsstelle 224 nicht in der Ebene der ersten Stirnseite 219 der Kapselung 218 angeordnet, sondern innerhalb der Kapselung 218. Deshalb weist die Kapselung 218 an ihrer ersten Stirnseite 219 drei Durchbrüche auf, durch welche der rechte Hebel 223A, der linke Hebel 223B und der erste Hebel 222 hindurchreichen. Bei der Einjustierung des Eckenlastfehlers wird die Kapselung 218 im Bereich der ersten Stirnseite 219 geknickt, gestaucht und/oder gestreckt. Folglich muss die Kapselung 218 zumindest in diesem Bereich eine hohe Elastizität und Flexibilität aufweisen. Vorzugsweise ist die Kapselung 218 in diesem Bereich deshalb aus Gummi oder einem weichelastischen Kunststoff gefertigt. Dies impliziert, dass die Kapselung 218 nicht einstückig ausgeführt sein muss, sondern mehrstückig und aus unterschiedlichen Materialien bestehend ausgeführt sein kann.

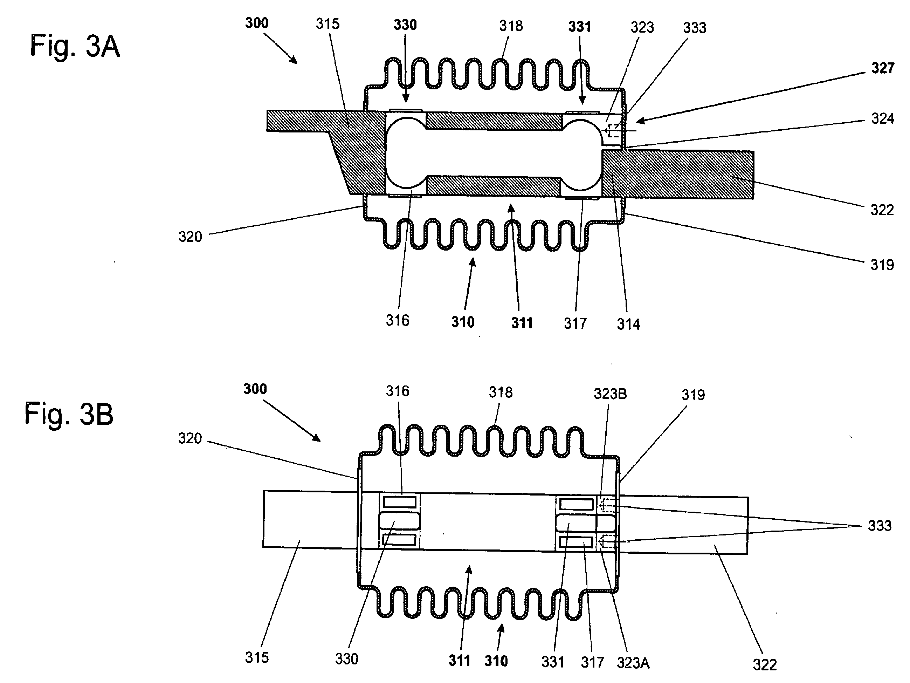

In Figur 3A ist ein gravimetrisches Messinstrument 300 in der Ansicht und im Schnitt in einer ersten Ausführung dargestellt. Figur 3B zeigt das gravimetrische Messinstrument 300 aus der Figur 3A in der Draufsicht, wobei nur die Kapselung 318 im Schnitt dargestellt ist. Die nachfolgende Beschreibung gilt für beide Figuren.

Die erste Ausführung eines erfindungsgemässen gravimetrischen Messinstruments 300 weist eine Wägezelle 310 auf, dessen Parallelführung 311 sich ebenfalls in der Ausgestaltung des Justierbereichs 327 und den Biegelagern 316 der Parallelführung 311 von den vorangehend beschriebenen Ausführungen unterscheidet. Die Biegelager 316 sind mittels vertikaler Durchbrechungen 330, 331 geteilt. Da die Biegelager 316 aufgespalten sind, weist die Wägezelle 311 insgesamt acht Dehnungsmessstreifen 317 auf. Ferner ragt beim feststehenden Parallelschenkel 314 nur der erste Hebel 322 über die erste Stirnseite 319 der Kapselung 318 hinaus. Der zweite Hebel 323 ist durch die Weiterführung der Durchbrechung 311 bis zur Stirnseite 319 in einen rechten Hebel 323A und in einen linken Hebel 323B zweigeteilt. Jeder Hebel 323A, 323B weist ein Sackloch 333 zum Ansetzen eines nicht dargestellten Richtwerkzeugs auf. Der am feststehenden Parallelschenkel 314 und am beweglichen Parallelschenkel 315 ausgebildete Flansch ist ebenfalls Bestandteil der Kapselung 318, beziehungsweise sie bilden jeweils einen Teil der ersten Stirnseite 319 und der zweiten Stirnseite 320. Wie in den Figuren 1A und 1B, dargestellt, ist die Deformationsstelle 324 in der Ebene der ersten Stirnseite 319 angeordnet. Dadurch wird beim justieren des Eckenlastfehlers die Stirnseite 319 nur geknickt und gebeult und nicht wie in Figur 2A und Figur 2B zusätzlich gestaucht oder gedehnt. Der Stellbereich 327 ist somit am feststehenden Parallelschenkel 314 und in der Stirnseite 319 der Kapselung 318 ausgebildet.

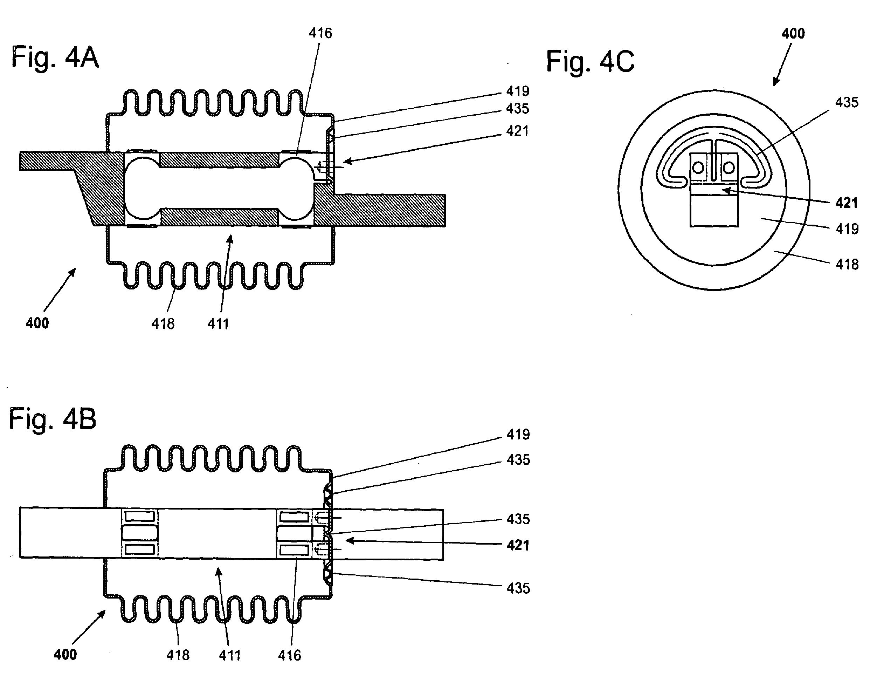

Figur 4A zeigt ein gravimetrisches Messinstrument 400 in der Ansicht und im Schnitt in einer zweiten Ausführung. Figur 4B zeigt das gravimetrische Messinstrument 400 aus Figur 4A in der Draufsicht und Figur 4C zeigt in der Aufsicht eine Stirnseite des gravimetrischen Messinstruments 400 aus den Figuren 4A und 4B. Die nachfolgende Beschreibung gilt für alle drei Figuren.

Das in den Figuren 4A, 4B und 4C dargestellte gravimetrische Messinstrument 400 entspricht weitgehend der dritten Ausführung, weshalb auf eine vollständige Beschreibung verzichtet wird. Der einzige Unterschied liegt darin, dass die Stirnseite 419 der Kapselung 418 eine Deformationssicke 435 aufweist. Durch die Deformationssicke 435 kann die Parallelführung 411 mit wesentlich geringerem Kraftaufwand einjustiert werden, da sich durch die Faltung der Deformationssicke 435 das Material der Kapselung 418 besser deformieren lässt. Ferner sind dadurch geringere Materialspannungen in der Kapselung 418 erreichbar, die sich während des Betriebes des gravimetrischen Messinstruments 400 abbauen und dadurch das Wägeergebnis beeinflussen können. Zudem beschränken sich die Deformationen infolge des Justierungsvorganges weitgehend auf die Deformationssicke 435. Gleichzeitig versteift die Deformationssicke 435 die Stirnseite 419. Schläge, welche während des Betriebes des gravimetrischen Messinstruments 400 auf die Kapselung 418 einwirken könnten, lassen sich durch diese Ausgestaltung vom Justierbereich 421 entkoppeln, was dazu führt, dass die einjustierte Lage der Biegelager 416 nicht infolge dieser Schläge verändert wird.

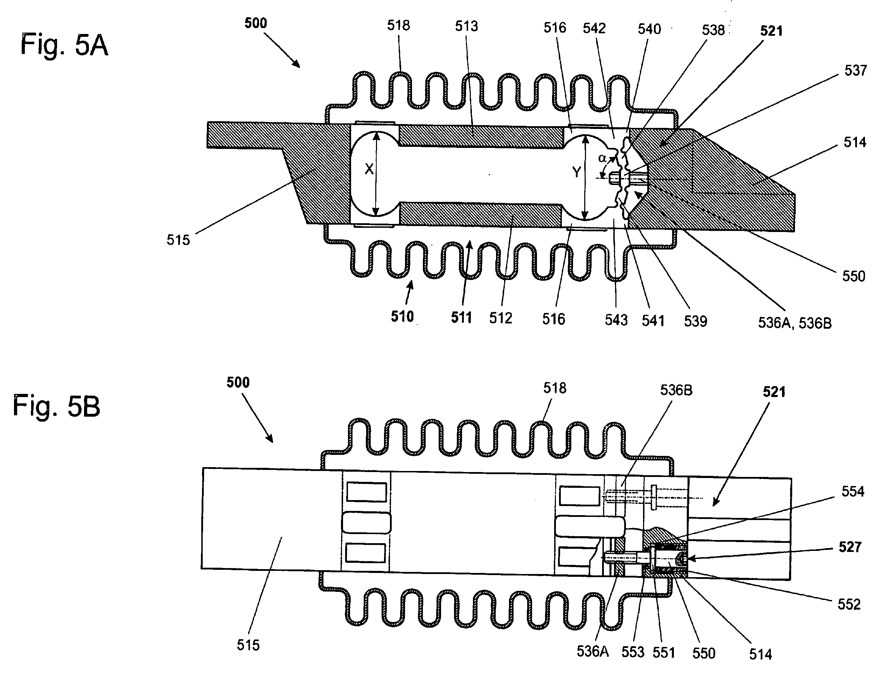

Das in den Figuren 5A und 5B dargestellte gravimetrische Messinstrument 500 in einem dritten Beispiel entspricht im Wesentlichen den vorangehenden

Ausführungsbeispielen mit geteilten Biegelagern, weshalb auf eine vollständige Beschreibung verzichtet wird. Ein markanter Unterschied liegt aber in der Ausgestaltung des Justierbereichs 521 der Wägezelle 510. Dieser weist zwei Kniehebel 536A und 536B auf. Jeder Kniehebel 536A, 536B weist ein Kniegelenk 537 auf, welches einen oberen Kniehebelschenkel 538 und einen unteren Kniehebelschenkel 539 verschwenkbar miteinander verbindet. Das Biegelager 516 des oberen Parallellenkers 513 schliesst nicht direkt am feststehenden Parallelschenkel 514 an, sondern ist durch einen oberen Zwischenbereich 542 und eine obere Deformationsstelle 540 mit diesem verbunden. Dasselbe gilt für den unteren Parallellenker 512, dessen Biegelager 516 durch einen unteren Zwischenbereich 543 und eine unter Deformationsstelle 541 mit dem feststehenden Parallelschenkel 514 verbunden ist. Der obere Kniehebelschenkel 538 ist mit dem oberen Zwischenbereich 542 beweglich verbunden und der untere Kniehebelschenkel 539 ist mit dem unteren Zwischenbereich 543 beweglich verbunden. Durch die Beweglichkeit der vorangehend beschriebenen Teile des Justierbereichs 521 untereinander, lassen sich bei einer linearen Verschiebung des Kniegelenks 537 in der Längsrichtung der Parallelführung 511 und relativ zu deren feststehendem Parallelschenkel 514, die Zwischenbereiche 542, 543 zueinander oder voneinander Verschwenken. Diese Verschwenkung führt zu einer Veränderung des vertikalen Abstandes Y zwischen den an den Zwischenbereichen 542, 543 anschliessenden Biegelagern 516. Da die Deformationsstellen 540, 541 innerhalb der Kapselung 518 angeordnet sind, führt eine Justierung nicht zu einer Deformation der Kapselung 518. Auch sind keinerlei Rückwirkungen und Belastungen der Kapselung 518 auf den Justierbereich 521 zu erwarten.

Damit das Kniegelenk 537 linear verschoben werden kann, muss zwischen dem ausserhalb der Kapselung 518 angeordneten Stellbereich 527 und jedem Kniehebel 535A, 536B, je ein Übertragungselement 550 angeordnet sein. Eine mögliche Ausgestaltung eines solchen Übertragungselements 550 wird im Detail in der Figur 5B gezeigt.

Das Übertragungselement 550 weist einem Gewindespindelantrieb ähnlich, ein Gewindeteil auf, welches in ein am Kniegelenk 537 ausgebildetes Muttergewinde eingreift. Das Übertragungselement 550 ist in einer am feststehenden Parallelschenkel 514 ausgebildeten Bohrung 554 in ungesichertem Zustand drehbar gelagert. Der am Übertragungselement 550 ringförmig ausgebildete Bund 551 stützt dieses gegen den feststehenden Parallelschenkel 514 in der Längsrichtung der Wägezelle 510 ab. Der Bund 551 liegt innerhalb der Bohrung 554 mit seiner gegen den beweglichen Parallelschenkel 515 gerichteten Seite am feststehenden Parallelschenkel 514 an. Die dem beweglichen Parallelschenkel 514 abgewandte Seite des Bundes 551 liegt an der Stirnseite einer Gewindehülse 552 an, welche in die Bohrung 554 einschraubbar ist. Mittels dieser Gewindehülse 552 kann der Bund 551 festgeklemmt und dadurch das Übertragungselement 550 verdrehsicher in der Bohrung 554 blockiert werden. Eine Dichtung 553 verhindert zudem, dass durch die Bohrung 554 Schmutz und Feuchtigkeit in den Innenraum der Kapselung 518 eindringen kann.

Aufgrund der in Figur 5A gezeigten geometrischen Verhältnisse der dargestellten Kniehebel 536A, 536B lässt sich die Parallelführung ausserordentlich genau einjustieren. Durch den grossen Lagewinkel α der Kniehebelschenkel 538, 539 zur Längsrichtung der Wägezelle 510, wird ein sehr grosses Übersetzungsverhältnis erzielt, wodurch es für eine Verschwenkung der Zwischenbereiche 542, 543 einer recht grossen linearen Verschiebung des Kniegelenks 537 bedarf.

Um den Einstellvorgang zu erleichtern, wird vorzugsweise der Abstand Y der Biegelager 516 des feststehenden Parallelschenkels 514 im unjustierten Zustand grösser gewählt als der Abstand X der Biegelager 516 des beweglichen Parallelschenkels 515. Dadurch muss zwar immer einjustiert werden, aber die Drehrichtung des Stellbereichs 527 ist vordefiniert. Weil der Abstand Y immer verringert werden muss, muss das Kniegelenk 537 gegen den feststehenden Parallelschenkel 514 hin gezogen werden, was dazu führt, dass der Bund 551 mit der entsprechenden Seite stets am Parallelschenkel 514 anliegt. Beim anschliessenden Sichern mit der Gewindehülse 552 findet deshalb keine Verschiebung des Kniegelenks 537 mehr statt.

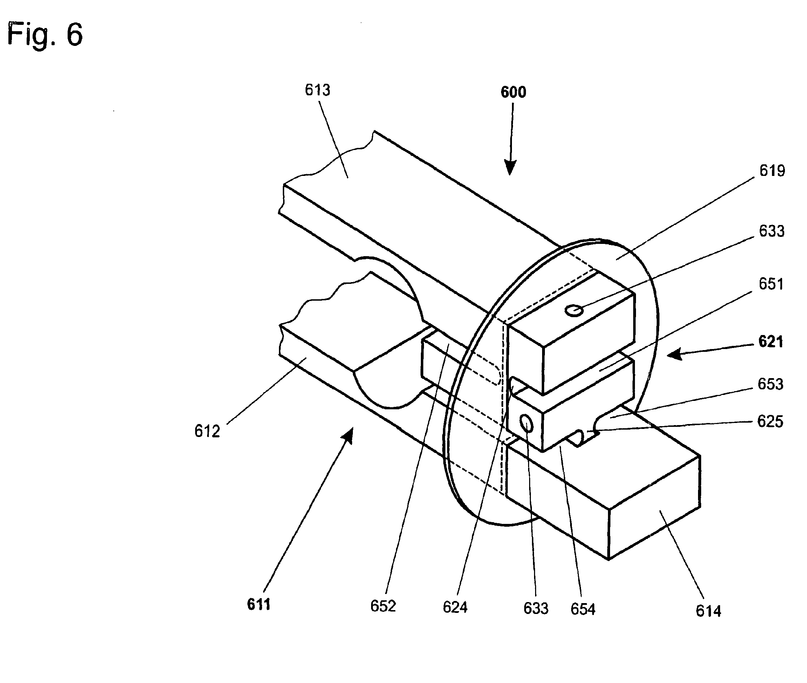

Figur 6 zeigt in dreidimensionaler Darstellung einen Teil eines gravimetrischen Messinstruments 600 in einer dritten Ausführung. Das gravimetrische Messinstrument 600 weist eine Parallelführung 611 auf, deren feststehender Parallelschenkel 614 einen Justierbereich 621 beinhaltet. Der feststehende Parallelschenkel 614 weist eine erste Deformationsstelle 624 auf, welche analog der in Figur 1 dargestellten Deformationsstelle mittels zweier Längsaussparungen 651, 652 ausgebildet ist. Die horizontale Lagerachse der ersten Deformationsstelle 624 ist dementsprechend orthogonal zur Längsrichtung der Parallelführung 611 angeordnet. Unterhalb dieser ersten Deformationsstelle 624 ist mittels zweier Queraussparungen 653, 654 eine zweite Deformationsstelle 625 ausgebildet. Deren horizontale Lagerachse ist in der Längsrichtung der Parallelführung angeordnet, wodurch ein Verwinden des oberen Parallellenkers 613 zum unteren Parallellenker 612 ermöglicht wird.

Zwecks besserer Einsehbarkeit ist lediglich die erste Stirnseite 619 der Kapselung dargestellt. Die Stirnseite 619 ist vorzugsweise aus einem hochelastischen Werkstoff wie beispielsweise Gummi oder Kunststoff gefertigt, da einzelne Bereiche der Stirnseite 619 infolge der Eckenlastjustierung gedehnt beziehungsweise gestaucht werden. Mittels mehrerer Deformationssicken beziehungsweise Falten könnte aber auch eine aus Metall gefertigte Stirnseite 619 ausreichend deformierbar ausgestaltet werden. Damit ein nicht dargestelltes Einstellwerkzeug an geeigneten Stellen angesetzt werden kann, weist der feststehende Parallelschenkel 614 an diesen Stellen je ein Sackloch 633 auf.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Beispielsweise kann der in der Figur 5 dargestellte Kniehebel auch durch einen Keil ersetzt werden. Ferner sind weitere, erfindungsgemässe Ausgestaltungen einer gekapselten Parallelführung mit extern angeordnetem Stellbereich möglich, insbesondere betreffend die Ausgestaltung von Kniehebeln und die Ausgestaltung von Kapselungen. Auch müssen die Parallelführungen wie in den Figuren dargestellt, nicht zwingend einstückig aufgebaut sein sondern können aus vielen verschiedenen Einzelzeilen bestehen. Ferner sind verschiedenste Materialien oder Materialkombinationen denkbar, ebenso wie verschiede Ausgestaltungen des Übertragungselements. Selbstverständlich kann der Justierbereich auch am beweglichen Parallelschenkel oder sogar an beiden Parallelschenkeln ausgebildet sein.

### Bezugszeichenliste

- 600, 500, 400, 300, 200, 100: gravimetrisches Messgerät
- 510,310,210,110: Wägezelle
- 611,511,411,311,211,111: Parallelführung
- 612,512,112: unterer Parallellenker
- 613, 513, 113: oberer Parallellenker
- 614, 514, 314, 114: feststehender Parallelschenkel
- 515, 315, 115: beweglicher Parallelschenkel
- 516, 416, 316, 116: Biegelager
- 317, 117: Dehnungsmessstreifen / Messwandler
- 518, 418, 318, 218, 118: Kapselung
- 619, 419, 319, 219, 119: erste Stirnseite
- 320, 120: zweite Stirnseite
- 621, 521, 421, 221, 121: Justierbereich
- 322, 222, 122: erster Hebel
- 323, 223, 123: zweiter Hebel
- 324, 224, 124: Deformationsstelle
- 125: erste Aussparung
- 126: zweite Aussparung
- 527, 327, 227A, 227B, 127: Stellbereich
- 228, 128: Stellschraube
- 129: Schraubendruckfeder
- 130: Schaltungsmodul
- 140: Prozessormodul
- 150: Eingabe/Ausgabeeinheit
- 197: Lastaufnehmer
- 198: Stütze
- 199: Grund
- 323A, 223A: rechter Hebel
- 323B, 223B: linker Hebel
- 230: Längsnut / weitere Aussparung
- 331,330: Durchbrechung
- 633, 333: Sackloch
- 435: Deformationssicke
- 536A, 536B: Kniehebel
- 537: Kniegelenk
- 538: oberer Kniehebelschenkel
- 539: unterer Kniehebelschenkel
- 540: obere Deformationsstelle
- 541: untere Deformationsstelle
- 542: oberer Zwischenbereich
- 543: unterer Zwischenbereich
- 550: Übertragungselement
- 551: Bund
- 552: Gewindehülse
- 553: Dichtung
- 554: Bohrung
- 624: erste Deformationsstelle
- 625: zweite Deformationsstelle
- 652,651: Längsaussparungen
- 654, 653: Queraussparungen

## Patentansprüche

1. Gravimetrisches Messinstrument (300, 400, 600) mit einer Wägezelle (310) und mit einer flexiblen, rohrförmigen Kapselung ( 318, 418), wobei die Wägezelle (310) eine Parallelführung (311, 411, 611) und mindestens einen Messwandler (317) aufweist und die Parallelführung (311, 411) einen beweglichen Parallelschenkel (315) beinhaltet, welcher durch zwei Parallellenker (612, 613) vertikal geführt mit einem feststehenden Parallelschenkel (314, 614) verbunden ist wobei an den Verbindungsstellen zwischen den Parallellenkern (612, 613) und den Parallelschenkeln (314, 315, 614, 615) Biegelager (316, 416) ausgebildet oder angeordnet sind, sowie das eine Ende (319, 419, 619) der rohrförmigen Kapselung ( 318, 418) am feststehenden Paralleischenkel (314, 514, 614) befestigt ist und das andere Ende (320) der rohrförmigen Kapselung (318, 418) am beweglichen Parallelschenkel (315) befestigt ist, wodurch zumindest die Parallelführung (311, 411, 611) und der Messwandler (317) von der Kapselung (318, 418) umfangen und **dadurch** vor Feuchtigkeit und Schmutz aus der Umgebung des gravimetrischen Messinstruments (300, 400) geschützt sind, **dadurch gekennzeichnet, dass** am beweglichen parallelschenkel (315) und/oder am feststehenden Parallelschenkel (314, 614) ein Justierbereich (421, 621) ausgebildet ist, mittels welchem Justierbereich ( 421, 621) der Abstand mindestens eines Biegelagers (316, 416) des oberen Parallellenkers (613) zu einem Biegelager (316, 416) des unteren Parallellenkers (612) einstellbar ist und welcher Justierbereich ( 421, 621) mit mindestens einem ausserhalb der Kapselung (318, 418) angeordneten Stellbereich (327) mechanisch verbunden und mittels dieses Stellbereichs (327) veränderbar ist und der Stellbereich (327) ein Sackloch (333, 633) zum Ansetzen eines Einstellwerhzeugs aufweist.

2. Gravimetrisches Messinstrument (300, 400, 500, 600) nach Anspruch 1, **dadurch gekennzeichnet, dass** der Justierbereich (421, 621) mindestens eine Deformationsstelle (324) aufweist, welche durch mindestens eine den beweglichen oder feststehenden Parallelschenkel ( 314, 315, 614) horizontal durchsetzende Aussparung ausgebildet ist, dass durch Kraft- oder Momentanwendung eine Verschwenkung des Justierbereichs (421, 521, 621) um eine durch die Deformationsstelle (324) in der Querrichtung (Q) der Parallelführung (311, 411, 611) definierte Lagerachse (D) erzeugbar ist, wobei das in den Justierbereich (421, 621) einmündende Ende eines der Parallellenker (612, 613) als Folge besagter Verschwenkung eine bleibende Verstellung in Vertikalrichtung (V) erfährt, wodurch im Wesentlichen ein Eckenlastfehler bezüglich der Längsrichtung (L) der Parallelführung (311, 411, 611) korrigierbar ist.

3. Gravimetrisches Messinstrument (300, 400, 600) nach Anspruch 2, **dadurch gekennzeichnet, dass** die Deformationsstelle (324) durch Einwirkung einer Justierkraft oder eines Justiermomentes auf den Stellbereich (327) in kontrollierter Weise plastisch verformbar ist und durch die plastische Verformung der mindestens einen Deformationsstelle ( 324) eine gezielte, bleibende Änderung in der gegenseitigen Lage der Parallellenker (612, 613) erreichbar ist.

4. Gravimetrisches Messinstrument (300, 400, 600) nach Anspruch 2 oder 3, **dadurch gekennzeichnet, dass** der Justierbereich (421, 621) an dem in den Justierbereich (421, 521, 621) einmündenden und vertikal verstellbaren Ende des Parallellenkers (612, 613) von einer weiteren Aussparung durchsetzt ist, welche in der vertikalen Mittellängsschnittfläche des beweglichen Parallelschenkels (315) oder des feststehenden Parallelschenkels (314, 614) verläuft und bis zum Biegelager (316, 416) geführt ist, wobei durch die weitere Aussparung zwei getrennte nebeneinander liegende Justierbereiche (421, 621) mit getrennten Deformationsstellen (324) gebildet werden, so dass:
a. einerseits durch eine parallele Kraft- oder Momentanwendung an den zwei getrennten nebeneinander liegenden Justierbereichen ( 421, 621) und damit durch eine parallele Verschwenkung derselben, eine bleibende parallele Vertikalverstellung des elastischen Biegelagers ( (316, 416) erzeugbar und **dadurch** ein Eckenlastfehler bezüglich der Längsrichtung (L) der Parallelführung (311, 411, 611) korrigierbar ist und
b. andererseits durch eine antiparallele Kraft- oder Momentanwendung an den zwei getrennten nebeneinander liegenden Justierbereichen ( 421, 621) und die **dadurch** verursachte entgegen gesetzte Verschwenkung der Justierbereiche (421, 521, 621), eine bleibende Verwindung des verstellbaren Parallellenker-Endes erzeugbar ist und **dadurch** ein Eckenlastfehler bezüglich der Querrichtung (Q) der Parallelführung (311, 411, 611) korrigierbar ist.

5. Gravimetrisches Messinstrument (300, 400, 600) nach Anspruch 4, **dadurch gekennzeichnet, dass** das elastische Biegelager (316, 416) an dem in den Justierbereich (421, 621) einmündenden und vertikal verstellbaren Ende des Parallellenkers (612, 613) mittels der Weiterführung der weiteren Aussparung bis zum Parallellenker ( 612, 613) oder mit einer Durchbrechung (330, 331) versehen, in zwei getrennte nebeneinander liegende elastische Biegelager (316, 416) aufgespalten ist.

6. Gravimetrisches Messinstrument (300, 400, 600) nach einem der Ansprüche 1 bis 5, **dadurch gekennzeichnet, dass** der Abstand der Biegelager (316, 416) beim einen Parallelschenkel (314, 614) im unjustierten Zustand grösser ist als der Abstand der Biegelager (316, 416) beim anderen Parallelschenkel (315).

7. Gravimetrisches Messinstrument (300, 400, 600) nach einem der Ansprüche 1 bis 6, **dadurch gekennzeichnet, dass** die Kapselung (318, 418) einen rohrförmigen Mittelteil und eine erste Stirnseite (319, 419, 619) und eine zweite Stirnseite (320) aufweist, welche Stirnseiten (319, 320, 419, 619) mit dem rohrförmigen Mittelteil gasdicht verbunden sind, die erste Stirnseite (319, 419, 619) mit dem beweglichen Parallelschenkel (315) gasdicht verbunden ist und die zweite Stirnseite (320) mit dem feststehenden Parallelschenkel (314, 614) gasdicht verbunden ist.

8. Gravimetrisches Messinstrument (300, 400, 600) nach Anspruch 7, **dadurch gekennzeichnet, dass** die Lage der Deformationsstelle (324) in einer, eine Stirnseite (319, 320, 419, 619) der Kapselung (318, 418) enthaltenden Ebene angeordnet ist.

9. Gravimetrisches Messinstrument (300, 400, 600) nach Anspruch 7, **dadurch gekennzeichnet, dass** die Stirnseite (319, 320, 419, 619) mindestens eine Deformationssicke (435) aufweist.

10. Gravimetrisches Messinstrument (300, 400, 600) nach einem der Ansprüche 1 bis 9, **dadurch gekennzeichnet, dass** die Kapselung ( 318, 418) aus Gummi, Kunststoff oder rostfreiem stahl gefertigt ist.

11. Gravimetrisches Messinstrument (300, 400, 600) nach einem der Ansprüche 1 bis 10, **dadurch gekennzeichnet, dass** die Kapselung ( 318, 418) ein faltenbalgförmig ausgebildetes Mittelteil aufweist.

## Claims

1. Gravimetric measuring instrument (300, 400, 600) comprising a weighing cell (310) and a flexible tubular-shaped encapsulation (318, 418), wherein the weighing cell (310) comprises a parallel-guiding mechanism (311, 411) and at least one measurement transducer (317) and the parallel-guiding mechanism (311, 411) includes a movable parallelogram leg (315) which is guided in vertical movement and connected to a stationary parallelogram leg (314, 614) by two parallel-guiding members (612, 613), wherein flexure pivots (316, 416) are formed or arranged at the joints between the parallel-guiding members (612, 613) and the parallelogram legs (314, 315, 614, 615), and wherein one end (319, 419, 619) of the tubular-shaped encapsulation (318, 418) is attached to the stationary parallelogram leg (314, 514, 614) and the other end (320) of the tubular-shaped encapsulation (318, 418) is attached to the movable parallelogram leg (315), so that at least the parallel-guiding mechanism (311, 411, 611) and the measurement transducer (317) are enclosed by the encapsulation (318, 418) and therefore protected against dirt and humidity from the environment of the gravimetric measuring instrument (300, 400), **characterized in that** an adjustment region (421, 621) is formed at the movable parallelogram leg (315) and/or at the stationary parallelogram leg (314), wherein the adjustment region (421, 621) allows the distance between at least one flexure pivot (416,) of the upper parallel-guiding member (513) and a flexure pivot (416) of the lower parallel-guiding member (612) to be adjusted, and wherein said adjustment region (421, 621) is mechanically connected to at least one adjustment-setting area (327) which is arranged outside the encapsulation (318, 418) and allows changes to be made to the adjustment region (421, 621)and that the adjustment-setting area (327, 527) comprises a blind hole (333, 633) for the engagement of an adjustment tool.

2. Gravimetric measuring instrument (300, 400, 500, 600) according to claim 1, **characterized in that** the adjustment region (421, 621) comprises at least one zone of deformation (324) constituted by at least one cutout which horizontally traverses the movable or the stationary parallelogram leg (314, 315, 614), and that by applying a force or a torque, the adjustment region (421, 521, 621) can be tilted about a pivot axis (D) which is defined by the zone of deformation (324) and oriented in the transverse direction (Q) of the parallel-guiding mechanism (311, 411, 611) and, as a result of said tilting, the end of one of the parallel-guiding members (612, 613) which terminates in the adjustment region (421, 621) undergoes a permanent displacement in the vertical direction (V), whereby an eccentric load error in the lengthwise direction (L) of the parallel-guiding mechanism (311, 411, 611) can essentially be corrected.

3. Gravimetric measuring instrument (300, 400, 600) according to claim 2, **characterized in that** the zone of deformation (324) can be subjected to a controlled plastic deformation by applying an adjusting force or an adjusting torque to the adjustment-setting area (327) and that through the plastic deformation of the at least one zone of deformation (324), a targeted permanent position-adjustment of the parallel-guiding members (612, 613) in relation to each other can be achieved.

4. Gravimetric measuring instrument (300, 400, 600) according to claim 2 or 3, **characterized in that** the adjustment region (421, 621) is split by a further cutout at the vertically adjustable end of the parallel-guiding member (612, 613) which terminates in the adjustment region (421, 621), wherein the cut runs in the vertical lengthwise median plane of the movable parallelogram leg (315) or of the stationary parallelogram leg (314614) and extends up to the flexure pivot (315, 416), so that as a result of the further cutout, two separate adjustment regions (421, 621) with separate zones of deformation (324) are formed adjacent to each other, so that:
a. on the one hand, by applying parallel forces or torques and thereby imparting parallel tilt displacements to the two adjacent separate adjustment regions (421, 621), a permanent parallel vertical adjustment of the elastic flexure pivot (316, 416) can be effected, whereby an eccentric load error in the lengthwise direction (L) of the parallel-guiding mechanism (311, 411, 611) can be corrected, and
b. on the other hand, by applying anti-parallel forces or torques and thereby imparting opposite tilt displacements to the two adjacent separate adjustment regions (421, 621), a permanent twisting distortion of the adjustable end of the parallel-guiding member can be effected, whereby an eccentric load error in the transverse direction (Q) of the parallel-guiding mechanism (311, 411, 611) can be corrected.

5. Gravimetric measuring instrument (400, 600) according to claim 4, **characterized in that** the elastic flexure pivot (316, 416), at the vertically adjustable end of the parallel-guiding member (612, 613) which terminates in the adjustment region (421, 621), is split into two separate adjacent elastic flexure pivots (316, 416) either by continuing the further cutout (230) up to the parallel-guiding member (612, 613) or by means of a perforation (330, 331) of the elastic flexure pivot (316, 416).

6. Gravimetric measuring instrument (300, 400, 600) according to one of the claims 1 to 5, **characterized in that** the distance between the flexure pivots (316, 416) of one of the parallelogram legs (314, 614) in the non-adjusted state is larger than the distance between the flexure pivots (316, 416) of the other parallelogram leg (315).

7. Gravimetric measuring instrument (300, 400, 600) according to one of the claims 1 to 6, **characterized in that** the encapsulation (318, 418) has a tubular-shaped mid-portion, a first end portion (319, 419, 619) and a second end portion (320), with a gas-tight connection between the end portions (319, 320, 419, 619) and the tubular-shaped mid-portion, a gas-tight connection between the first end portion (319, 419, 619) and the movable parallelogram leg (315) and a gas-tight connection between the second end portion (320) and the stationary parallelogram leg (314, 614).

8. Gravimetric measuring instrument (300, 400, 600) according to claim 7, **characterized in that** the zone of deformation (324) is located in a plane which contains one end portion (319, 320, 419, 619) of the encapsulation (318, 418).

9. Gravimetric measuring instrument (300, 400, 600) according to claim 7, **characterized in that** the end portion (319, 320, 419, 619) comprises at least one flexible corrugation (435).

10. Gravimetric measuring instrument (300, 400, 600) according to one of the claims 1 to 9, **characterized in that** the encapsulation (318, 418) is made of rubber, synthetic material, or stainless steel.

11. Gravimetric measuring instrument (300, 400, 600) according to one of the claims 1 to 10, **characterized in that** the encapsulation (318, 418) comprises a mid-portion configured in the form of a bellows.

## Revendications

1. Instrument de mesure (300, 400, 600) gravimétrique comprenant une cellule de pesée (310) et un encapsulage (318, 418) flexible et de forme tubulaire, la cellule de pesée (310) présentant un guide parallèle (311, 411, 611) et au moins un convertiseur de mesure (317) et le guide parallèle (311, 411) contenant une branche parallèle (315) mobile, laquelle, guidée Verticalement, par deux bras oscillants parallèles (612, 613), est reliée à une branche parallèle (314, 614) fixe, des paliers de flexion (316, 416) étant conçus ou disposés aux points de liaison entre les bras oscillants parallèles (612, 613) et les branches parallèles (314, 315, 614, 615), et l'une des extrémités (319, 419, 619) de l'encapsulage (318, 418) tublaire étant fixée sur la branche parallèle (314, 514, 614) fixe et l'autre extrémité (320) de l'encapsulage (318, 418) tubulaire étant fixée sur la branche parallèle (315) mobile, de sorte qu'au moins le guide parallèle (311, 411, 611) et le convertisseur de mesure (317) étant éntourés par l'encapsulage (318, 418) sont protégés ainsi de l'humidité et de la poussière provenant de l'environnement de l'instrument de mesure (300, 400) gravimétrique, **caractérisé en qu'**une plage d'ajustage (421, 621) est réalisée sur la branche parallèle mobile (315) et/ou sur la branche parallèle fixe (314, 614), plage d'ajustage (421, 621) au moyen de laquelle l'espacement entre au moins un palier de flexion (316, 416) du bras oscillant supérieur (613) et un palier de flexion (316, 416) du bras oscillant parallèle inférieur (612) est réglable et laquelle plage d'ajustage (421, 621) est reliée mécaniquement à au moins une plage de réglage (327) disposée à l'extérieur de l'encapsulage (318, 418) et est modifiable au moyen de cette plage de réglage (327) et la plage de réglage (327) présente un trou borgne (333, 633) pour le placement d'un outil de réglage.

2. Instrument de mesure (300, 400, 500, 600) gravimétrique selon la revendication 1, **caractérisé en ce que** la plage d'ajustage (421, 621) présente au moins un point de déformation (324), lequel est réalisé par au moins un évidement traversant horizontalement la branche parallèle (314, 315, 614) mobile ou fixe, **en ce qu'**un basculement de la plage d'ajustage (421, 521, 621) autour d'un axe de palier (D) défini par le point de déformation (324) dans le sens transversal (Q) du guide parallèle (311, 411, 611) peut être généré par application de force ou de couple, l'extrémité, débouchant dans la plage d'ajustage (421, 621), de l'un des bras oscillants parallèles (612, 613) subissant comme conséquence dudit basculement un déplacement permanent dans le sens vertical (V), une erreur de charge d'angle par rapport au sens longitudinal (L) du guide parallèle (311, 411, 611) pouvant être corrigé pour l'essentiel.

3. Instrument de mesure (300, 400, 600) gravimétrique selon la revendication 2, **caractérisé en ce que** le point de déformation (324) peut être déformé plastiquement de façon contrôlée par l'action d'une force d'ajustage ou d'un couple d'ajustage sur la plage de réglage (327) et une variation ciblée et permanente dans la position réciproque des bras oscillants parallèles (612, 613) peut être obtenue par la déformation plastique du au moins un point de déformation (324).

4. Instrument de mesure gravimétrique (300, 400, 600) selon la revendication 2 ou 3, **caractérisé en ce que** la plage d'ajustage (421, 621) sur l'extrémité du bras oscillant parallèle (612, 613), débouchant dans la plage d'ajustage (421, 521, 621) et déplaçable verticalement, est traversée par un autre évidement, lequel se situe dans la surface de coupe longitudinale centrale verticale de la branche parallèle (315) mobile ou de la branche parallèle (314, 614) fixe et est guidé jusqu'au palier de flexion (316, 416), deux plages de réglage (421, 621) séparées et juxtaposées avec des points de déformation (324) séparés étant formées par l'autre évidement, de sorte que :
a) d'une part un déplacement vertical parallèle permanent du palier de flexion (316, 416) élastique peut être généré par une application de force ou de couple parallèle sur les plages d'ajustage (421, 621) séparées et juxtaposées et donc par un basculement parallèle de celles-ci et une erreur de charge d'angle par rapport à la direction longitudinale (L) du guide parallèle (311, 411, 611) pouvant être corrigée ainsi, et
b) d'autre part une torsion permanente de l'extrémité de bras oscillant parallèle déplaçable peut être généré par une application de force ou de couple antiparallèle sur les deux plages d'ajustage (421, 621) séparées et juxtaposées et par le basculement, ainsi occasionné et opposé, des plages d'ajustage (421, 521, 621) et une erreur de charge d'angle par rapport à la direction transversale (Q) du guide parallèle (311, 411, 611) peut être corrigée ainsi.

5. Instrument de mesure (300, 400, 600) gravimétrique selon la revendication 4, **caractérisé en ce que** le palier de flexion (316, 416) élastique est doté sur l'extrémité, débouchant dans la plage d'ajustage (421, 621) et déplaçable verticalement, du bras oscillant parallèle (612, 613) au moyen du guidage ultérieur de l'autre évidement jusqu'au bras oscillant parallèle (612, 613) ou d'un percement (330, 331), et est divisé en au moins deux paliers de flexion (316, 416) élastiques séparés et juxtaposés.

6. Instrument de mesure (300, 400, 600) gravimétrique selon l'une des revendications 1 à 5, **caractérisé en ce que** l'espacement des paliers de flexion (316, 416) sur l'une des branches parallèles (314, 614) est supérieur, dans l'état non ajusté, à l'espacement des paliers de flexion (316, 416) sur l'autre branche parallèle (315).

7. Instrument de mesure (300, 400, 600) gravimétrique selon l'une des revendications 1 à 6, **caractérisé en ce que** l'encapsculage (318, 418) présente une partie centrale tubulaire et un premier côté avant (319, 419, 619) et un second côté avant (320), lesquels côtés avant (319, 320, 419, 619) sont reliées de façon étanche au gaz à la partie centrale tubulaire, le premier côté avant (319, 419, 619) étant relié de façon étanche au gaz à la branche parallèle mobile (315) et le second côté avant (320) étant relié de façon étanche au gaz à la branche parallèle fixe (314, 614).

8. Instrument de mesure (300, 400, 600) gravimétrique selon la revendication 7, **caractérisé en ce que** la position du point de déformation (324) est située dans un plan contenant un côté avant (319, 320, 419, 619) de l'encapsulage (318, 418).

9. Instrument de mesure (300, 400, 600) gravimétrique selon la revendication 7, **caractérisé en ce que** le côté avant (319, 320, 419, 619) présente au moins une moulure de déformation (435).

10. Instrument de mesure (300, 400, 600) gravimétrique selon l'une des revendications 1 à 9, **caractérisé en ce que** l'encapsulage (318, 418) est à base de caoutchouc, plastique ou acier inox.

11. Instrument de mesure (300, 400, 600) gravimétrique selon l'une des revendications 1 à 10, **caractérisé en ce que** l'encapsulage (318, 418) présente une partie centrale en forme de soufflet d'intercirculation.
